# EUROPÄISCHE PATENTSCHRIFT

(11) **EP 0 641 798 B1**
(45) Veröffentlichungstag und Bekanntmachung des Hinweises auf die Patenterteilung: **06.03.1996**
(21) Anmeldenummer: 94113180.7
(22) Anmeldetag: 24.08.1994
(51) Int. Cl.: C07F 7/08, C11D 1/00

(54) **Silane mit hydrophilen Gruppen, deren Herstellung und Verwendung als Tenside in wässrigen Medien**
Silanes with hydrophylic groups, their preparation and use as surfactant in aqueous media
Silanes avec des groupements hydrophiliques et leur utilisation comme agents tensioactifs dans des milieux aqueux

(30) Priorität: 06.09.1993 DE 4330059
(43) Veröffentlichungstag der Anmeldung: 08.03.1995
(73) Patentinhaber: Th. Goldschmidt AG, D-45127 Essen (DE)
(72) Erfinder: Klein, Klaus-Dieter, Dr., D-45468 Mülheim (DE); Knott, Wilfried, Dr., D-45141 Essen (DE); Koerner, Götz, Dr., D-45259 Essen (DE); Krakenberg, Manfred, D-45276 Essen (DE)

(56) Entgegenhaltungen:
- EP-A- 0 367 381
- EP-A- 0 394 963
- WO-A-93/08198
- GB-A- 2 203 152
- CHEMICAL ABSTRACTS, vol. 83, no. 8, 25. August 1975, Columbus, Ohio, US; abstract no. 62401d, TAKAHASHI, H. ET AL. 'STRUCTURAL EFFECTS ON THE PROPERTIES OF NONIONIC SURFACTANTS. IX. SYNTHESES AND SOME SURFACE ACTIVE PROPERTIES OF BIS(7,7-DIMETHYL-2-OXA-7-SIL AOCTYL)METHYLPOLY(OXYETHYLENE) MONOETHERS' Seite 241 ;

## Beschreibung

Die Erfindung betrifft neuartige Silane mit hydrophilen Gruppen, deren Herstellung und deren Verwendung als Tenside in wäßrigen Medien. Sie betrifft insbesondere in sauren und alkalischen Medien hydrolysestabile Silantenside mit hoher Erniedrigung der Oberflächenspannung wäßriger Medien. Dabei sind unter dem Begriff der "wäßrigen" Medien auch solche Medien zu verstehen, die überwiegend aus Wasser bestehen und zusätzlich wasserlösliche oder mit Wasser mischbare organische Lösungsmittel enthalten können.

Es ist aus dem Stand der Technik bekannt, daß organomodifizierte Siloxane, wie z.B. Polyethersiloxane oder Polysiloxane, welche Substituenten mit anionischen, kationischen oder amphoteren Gruppen aufweisen, bei entsprechend ausgewählter Struktur und ausgewogenem Verhältnis hydrophiler und hydrophober Gruppen die Oberflächenspannung wäßriger Lösungen in ausgeprägtem Maße erniedrigen können.

Tenside mit mindestens drei Siliciumatomen sind in der DE-PS 41 41 046 beschrieben. Sie entsprechen dabei der allgemeinen Formel 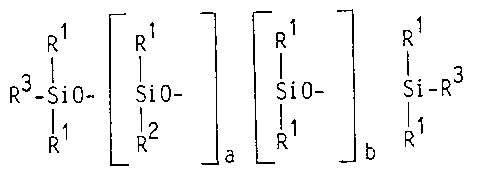
- R¹ =: Methyl- oder Phenylrest, wobei jedoch mindestens 90 % der R¹-Reste Methylreste sind,
- R: = R¹ oder
= -(CH₂)₆-OSO₃ ⁻.M⁺, M⁺ = Alkali-, 1/2 Erdalkali- oder gegebenenfalls alkylsubstituiertes Ammoniumion,
- R³ =: R¹ oder R,
mit der Maßgabe, daß im durchschnittlichen Molekül mindestens 1 Rest R oder R³ ein -(CH₂)₆-OSO₃ ⁻.M⁺-Rest ist,
- a =: 0 bis 5 und
- b =: 0 bis 5.

Die ausgewählten, im Falle der Anwesenheit dreier Siliciumatome, Trisiloxanhexylsulfate bewirken in neutralen wäßrigen Medien eine ausgezeichnete Erniedrigung der Grenzflächenspannung auf Werte um 21 mN/m. Sie sind jedoch in sauren oder alkalischen Lösungen nicht beständig und verlieren durch Hydrolyse der Si-O-Si-Bindungen und erneute Kondensation der Hydrolyseprodukte zu höhermolekularen Oligomeren sehr schnell ihre Wirksamkeit und werden teilweise in wäßrigen Medien unlöslich.

Tenside mit niedrigem Gehalt an Siliciumatomen sind ferner in der EP-OS 0 367 381 (A2) und der GB-PS 1 520 421 beschrieben.

Die EP-OS 0 367 381 (A2) betrifft Organosiliciumverbindungen der allgemeinen Formel 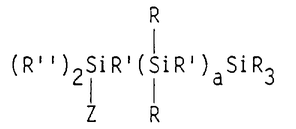 wobei R unabhängig voneinander einen Alkyl-, Aryl-, halogenierten Alkyl- oder halogenierten Arylrest mit bis zu 18 Kohlenstoffatomen bedeutet, jedes R' eine Alkylengruppe darstellt, welche die benachbarten Siliciumatome durch bis zu 6 Kohlenstoffatome voneinander trennt, und wobei R'' unabhängig voneinander die Bedeutung von R hat oder, wenn a = Null ist, die Gruppe R₃SiR'- bedeutet. Z ist ein hydrophiler Substituent, der Schwefel, Stickstoff oder Phosphor enthält, eine carboxyfunktionelle Gruppe oder deren Salz. a hat einen Wert von 0, 1 oder 2.

Hieraus folgt, daß der siliciumorganische Rest definitionsgemäß mindestens zwei Siliciumatome enthält. Die Herstellung dieser Carbosilane ist relativ aufwendig und erfolgt beispielsweise durch Grignard-analoge Verfahren. Danach werden mittels Hydrosilylierung von beispielsweise Allylglycidylether oder Allylamin und an sich bekannten Folgereaktionen Carbosilantenside mit quaternärer, Sulfonat- oder Betainstruktur synthetisiert. Die so erhaltenen Substanzen erniedrigen die Oberflächenspannung einer 1 %igen Lösung in destilliertem Wasser auf 23 bis 25 mN/m.

In der GB-PS 1 520 421 werden Carbosilantenside und deren Herstellung beschrieben. Sie weisen die allgemeine Formel 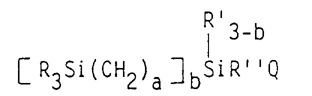 auf. R ist ein Methyl-, Ethyl-, Propyl- oder Trifluorpropylrest, wobei jedoch wenigstens 50 % der Reste R Methylreste sind, R' ist ein Alkylrest mit 1 bis 6 Kohlenstoffatomen, R'' ist ein zweiwertiger aliphatischer Kohlenwasserstoffrest mit 2 bis 6 Kohlenstoffatomen, der Q und das benachbarte Siliciumatom durch eine Brücke von mindestens 2 Kohlenstoffatomen verbindet. Q ist dabei die Gruppe -O(C₂H₄O)_{c}X, wobei c einen Wert von 3 bis 12 hat und X ein Wasserstoffrest, der Rest R''', 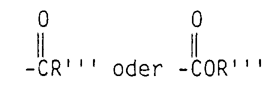 ist, in welchem R''' ein Alkylrest mit 1 bis 5 Kohlenstoffatomen ist, und a = 1 oder 2 und b = 2 oder 3 ist.

Auch hier müssen definitionsgemäß mindestens zwei Siliciumatome vorhanden sein. Diese Verbindungen zeigen in anwendungstechnischen Tests bemerkenswerte Schaumeigenschaften.

Dabei war es dem Fachmann bekannt, daß bei diesen bekannten Carbosilanen innerhalb von Gruppen mit vergleichbarer Struktur bei abnehmender Anzahl der Siliciumatome, insbesondere bei einer Reduzierung der Anzahl der Siliciumatome von 4 auf 3 oder 2, sich die tensidischen Eigenschaften der Verbindungen verschlechterten. Diese Beobachtung fand ihren Niederschlag in der Theorie von Neumann (A.W. Neumann, D. Renzow, Zeitschrift f. Phys. Chem., New Issue 68, 11 (1969)), die besagt, daß für die Erniedrigung der Oberflächenspannung wäßriger Lösungen bis auf unter 30 bis 40 mN/m die permethylierte Oberfläche des Siloxangerüstes verantwortlich ist.

Weiterhin ist auf die japanischen Publikationen von H. Maki et al. in YUKAGAGU 19, No. 4, S. 51 ff. und YUKAGAGU 19, No. 11, S. 23 ff. - beide aus dem Jahre 1970 - hinzuweisen, in denen definierte Verbindungen der Formel

(CH₃)₃Si(CH₂)₃(C₂H₄O)ₙH und ((CH₂)₄)₃Si(CH₂)₃(C₂H₄O)ₘH

wobei n = 4,0 oder 7,7 und m = 10 oder 17 ist, beschrieben werden. Diese Verbindungen zeigen in 0,1 gew.-%iger Lösung aber nur eine Erniedrigung der Grenzflächenspannung auf Werte ≥ 26,5 mN/m.

In diesen japanischen Veröffentlichungen werden ebenfalls quaternäre Stickstoffverbindungen der Formel

Bu₃M(CH₂)₃N⁺(CH₃)₃Cl⁻ (Bu = Butyl, M = Sn, Si)

beschrieben, die zwar bakteriostatisch wirksam sind, jedoch wenig tensidischen Charakter aufweisen. Beste Vertreter dieser quaternären Verbindungen bewirkten in einer 1 %igen wäßrigen Lösung eine Oberflächenspannungserniedrigung auf 32 mN/m.

Der vorliegenden Erfindung liegt die überraschende Erkenntnis zugrunde, daß im Gegensatz zum allgemeinen Fachwissen, wie es z. B. in der Theorie von Neumann zum Ausdruck kommt, ausgewählte Silane, also Verbindungen mit nur einem einzigen Siliciumatom, bei denen jedoch das Verhältnis der hydrophilen und hydrophoben Molekülteile ausgewogen ist, die Oberflächenspannung von Wasser außerordentlich wirksam erniedrigen und dabei im Gegensatz zu den Siloxantensiden auch in sauren und alkalischen Medien über Tage und Wochen hydrolysestabil sind. Ein weiterer und nicht vorhersehbarer Vorteil der erfindungsgemäßen Silane ist deren vollständige biologische Abbaubarkeit, die sie für ihre Anwendung als Tenside besonders geeignet macht. Ein solches Eigenschaftsprofil ließ sich aus dem Stand der Technik nicht herleiten und widerspricht den bisher üblichen Annahmen über die strukturellen Anforderungen, die siliciumorganische Verbindungen erfüllen sollten, um in wäßrigen Systemen grenzflächenspannungserniedrigende Eigenschaften zu zeigen.

Ein Gegenstand der vorliegenden Erfindung sind deshalb Silane der allgemeinen Formel 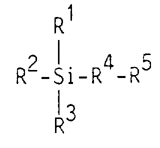 wobei
- R¹,: R und R³ im Molekül gleich oder verschieden sind und aliphatische oder aromatische Kohlenwasserstoffreste bedeuten,
- R⁴: ein zweiwertiger Kohlenwasserstoffrest mit 4 bis 12 Kohlenstoffatomen und einer seitenständig gebundenen Hydroxylgruppe ist, wobei der Kohlenwasserstoffrest durch einen Ethersauerstoff unterbrochen sein kann,
- R⁵: ein hydrophiler ionischer Rest ist.

Beispiele für bevorzugte Reste R¹, R und R³ sind Methyl-, Ethyl-, Propyl-, Butyl- oder Phenylreste. Jedoch ist vorzugsweise nur einer der Reste R¹, R und R³ ein Phenylrest.

Vorzugsweise sind mindestens 90 % der Reste R¹, R und R³ Methylreste.

Der Rest R⁴ ist ein zweiwertiger Kohlenwasserstoffrest mit 4 bis 12 Kohlenstoffatomen und einer seitenständig gebundenen Hydroxylgruppe. Dieser Rest leitet sich von einem Epoxid ab, welches eine olefinische, der Hydrosilylierung zugängliche Doppelbindung aufweist und dessen Epoxidring geöffnet worden ist. Schematisch läßt sich dies mit folgendem Beispiel zeigen:

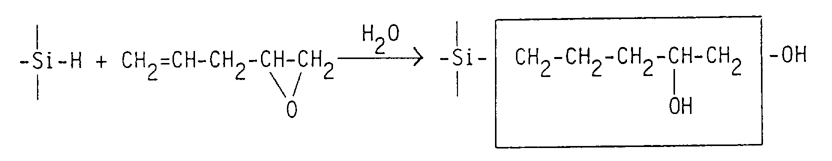

Die umrahmte Gruppe entspricht dabei dem Rest R⁴.

Bevorzugte Beispiele für Reste R⁴ sind: 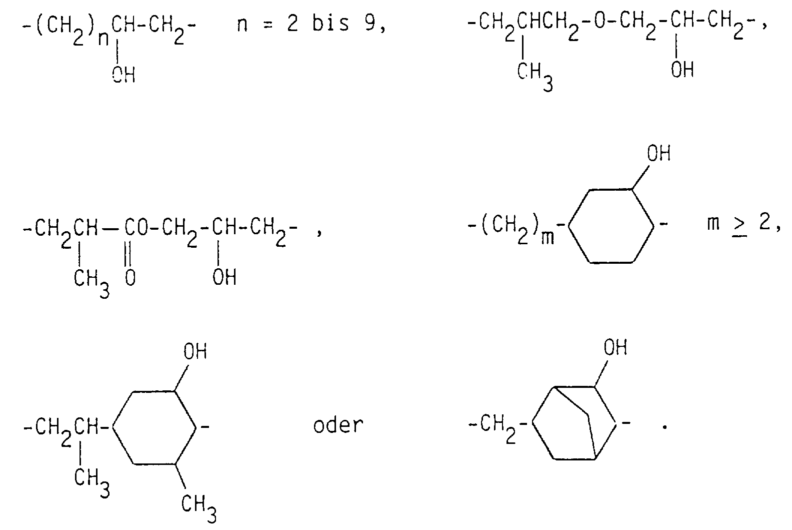 R⁵ ist ein ionischer Rest der Formel 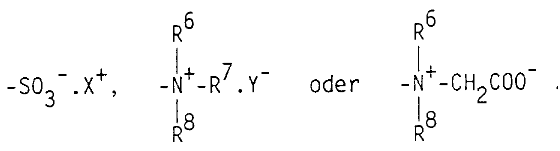 Dabei sind die Reste R⁶, R⁷ und R⁸ Alkylreste mit 1 bis 6 Kohlenstoffatomen, die im Molekül gleich oder verschieden sein können. Beispiele solcher Reste sind der Methyl-, Ethyl-, Propyl-, Butyl- und der Isobutylrest.

X⁺ ist ein einwertiges Kation und zwar in der Regel ein Wasserstoff-, Alkali-, 1/2 Erdalkali- oder gegebenenfalls substituiertes Ammoniumion. Als substituierte Ammoniumionen kommen insbesondere Isopropyl-, Triethyl-, Butylmethyl- oder Octylammoniumionen in Frage.

Y⁻ ist ein beliebiges Anion, vorzugsweise ein Halogen- oder Acetation. Als Halogenion ist das Chlorion bevorzugt.

Beispiele für erfindungsgemäße Silane sind die folgenden Verbindungen: 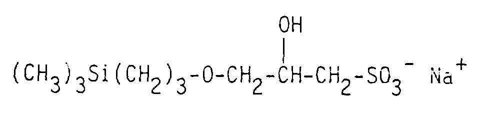 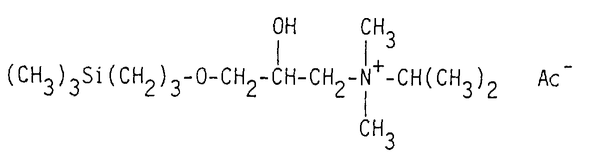 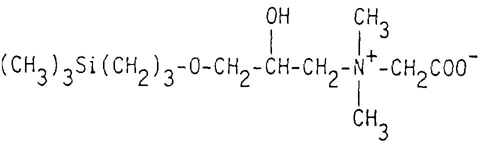 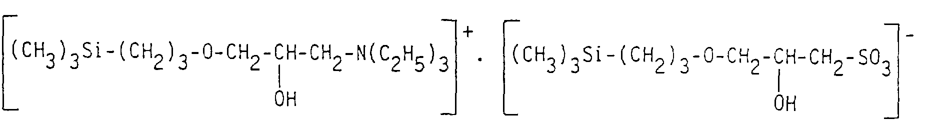 Ein weiterer Gegenstand der Erfindung ist die Herstellung der erfindungsgemäßen Verbindungen. Diese ist dadurch gekennzeichnet, daß man
a) an Silane der allgemeinen Formel 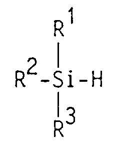 Epoxide, welche eine olefinische Doppelbindung aufweisen, in Gegenwart eines Hydrosilylierungskatalysators anlagert und
b) die erhaltenen silanmodifizierten Epoxide unter Öffnung des Epoxidringes in an sich bekannter Weise
   b1) sulfoniert oder
   b2) durch Umsetzung mit tertiären Aminen der Formel 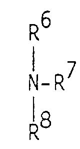 in Gegenwart einer Säure YH quaterniert oder
   b3) durch Umsetzung mit einer Verbindung der Formel 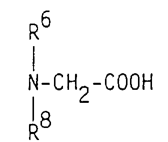 in das Betain überführt.

Vorzugsweise führt man die Hydrosilylierung bei erhöhter Temperatur und/oder in Gegenwart eines Lösungsmittels durch, wobei man als Katalysator einen Platinkatalysator verwendet.

Der Verfahrensschritt b1) erfolgt in an sich bekannter Weise durch Umsetzung der silanmodifizierten Epoxide mit Alkalisulfit/Alkalihydrogensulfat bzw. dem Sulfit/Hydrogensulfat des gewünschten Kations in Gegenwart eines polaren Lösungsmittels. Als Lösungsmittel wird vorzugsweise ein Isopropanol/Wasser-Gemisch verwendet. Die Umsetzung wird vorzugsweise bei erhöhter Temperatur, z.B. bei Siedetemperatur des Isopropanol/Wasser-Gemisches vorgenommen.

Der Verfahrensschritt b2), nämlich die Umsetzung der silanmodifizierten Epoxide mit den verschiedenen tertiären Aminen erfolgt ebenfalls vorzugsweise in Gegenwart eines polaren Lösungsmittels, insbesondere eines kurzkettigen, niedrigsiedenden, aliphatischen Alkohols, wie z.B. Isopropanol. Die Umsetzung verläuft in Gegenwart einer Protonensäure, wobei die Essigsäure bevorzugt ist.

Der Verfahrensschritt b3) beinhaltet die Umsetzung der silanmodifizierten Epoxide mit Dialkylaminoessigsäure in Gegenwart eines polaren Lösungsmittels, insbesondere eines niederen aliphatischen Alkohols, wie z.B. Isopropanol.

Es ist natürlich auch möglich, in äquivalenter Verfahrensweise das silanmodifizierte Epoxid zunächst mit Dialkylamin, z.B. Dimethylamin, umzusetzen und das erhaltene Produkt dann durch Umsetzung mit Natriumchloracetat in Gegenwart eines polaren Lösungsmittels, wie Isopropanol, in das Betain umzuwandeln.

Es ist dem Fachmann bekannt, daß die kritische Micellbildungskonstante [cmc] in wäßrigen Lösungen, die eine wichtige Größe zur Charakterisierung des tensidischen Verhaltens einer Verbindung ist, vom Bindungsgrad des Gegenions zum Tensidrest abhängt. So nimmt durch eine verstärkte Bindung des Gegenions zum Tensidrest die cmc des Tensids ab. Der Grad der Bindung ist dabei abhängig von der Polarisierbarkeit, der Valenz und der Hydrathülle des Gegenions. Daher werden die tensidspezifischen Eigenschaften, wie Schaum- und Netzvermögen, Löslichkeit und Oberflächenspannungserniedrigung, einer Verbindung nicht nur vom Tensidrest, sondern auch vom Gegenion beeinflußt.

Es ist möglich, die Verfahrensstufen b1) und b2) gleichzeitig ablaufen zu lassen und Anion-Kation-Tenside herzustellen, indem man die Umsetzung des Verfahrensproduktes der Verfahrensstufe a) mit Trialkylammoniumhydrogensulfit durchführt. Man erhält dann in äquimolaren Mengen sowohl das Sulfonat wie die entsprechende quaternäre Ammoniumverbindung als Komplex. Dies wird durch das folgende Reaktionsschema erläutert: 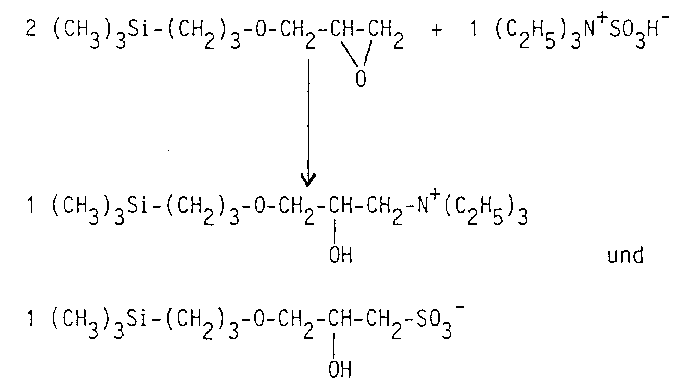 Ein weiterer Gegenstand der Erfindung ist die Verwendung der erfindungsgemäßen Silane als Tenside in wäßrigen Medien. Es ist dabei möglich, durch Zugabe von 1 Gew.-% erfindungsgemäßer Verbindungen die Oberflächenspannung wäßriger Lösungen auf Werte bis zu etwa 23 mN/m zu erniedrigen. Dabei ist die biologische Abbaubarkeit der erfindungsgemäßen Verbindungen von ganz besonderer Bedeutung. Sie wird ergänzt durch die Hydrolysestabilität der Silantenside.

Wichtige Einsatzmöglichkeiten der erfindungsgemäßen Silantenside sind u. a.:
als Netzmittel:
in Zubereitungen zur Behandlung von Pflanzen (Agroformulierungen); zur Verbesserung der Benetzung niederenergetischer Substrate, wie etwa Polyethylen-, Polypropylenoberflächen; für die Anwendung in der Lackindustrie; bei der Herstellung photografischer Filme; in der Galvanotechnik;
als Dispergiermittel:
für Dispersionsfarbstoffe, Pigmente und Füllstoffe;
als Emulgiermittel oder Zusatzstoffe in der Textilindustrie zur Herstellung von Textilhilfsmitteln, Avivagen, Gleitmitteln, antistatischen Zubereitungen; als Färbereihilfsmittel;
als Tenside allgemein:
zur Verwendung in Feuerlöschmitteln; als Schaumstabilisatoren; als grenzflächenaktive Zusätze für Schnelldrucktinten, Klebstoffe, Dispersionsklebstoffe, Schmelzkleber; Verwendung in Waschmitteln; als Zusatzstoffe für technische Reiniger;
als Rohstoffe für die Verwendung in der Kosmetik, z. B. in Pflegemitteln, Shampoos, Duschbädern;
in technischen Anwendungen und im Haushalt:
als Antibeschlagmittel; zur Verwendung in Geschirrspülmitteln, Waschmitteln, WC-Reinigern, Selbstglanzemulsionen.

Die Herstellung der erfindungsgemäßen Verbindungen und deren Eigenschaften werden in den folgenden Beispieln noch näher erläutert.

### Beispiel 1

### Herstellung von [Glycidyloxypropyl]trimethylsilan

In einen 300-ml-Laborautoklaven werden 30,3 g Allylglycidylether (0,266 Mol) und 3 mg Platinkatalysator eingewogen. Der Autoklav wird nun samt Inhalt unter Argon-Schutzgasbedampfung in einem Aceton/Trockeneisbad gekühlt, und 19,7 g Trimethylsilan (0,266 Mol, Kp. = 6,7°C) werden aus kondensierter Phase übergehebert. Der Autoklav wird verschlossen und auf 130°C geheizt. Dabei steigt der Innendruck bis auf 7,6 bar an, um dann auf ca. 3,2 bar wieder abzufallen, was eine Reaktion signalisiert.

Nach der Entspannung des Autoklaven, die nach dem Abkühlen auf Raumtemperatur erfolgt, wird der Inhalt durch Filtration vom Platinkatalysator befreit.

### Epoxid-Sauerstoff:Theorie 8,5 % Praxis 8,4 %

Die ⁹Si-NMR- und ¹H-NMR-spektroskopische Analyse ergibt folgende Produktstruktur:

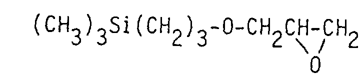

Das Produkt wird im Ölpumpenvakuum bei 20°C von niederflüchtigen Bestandteilen befreit und dann ohne weitere Aufarbeitung eingesetzt.

### Beispiel 2

Reaktion von [Glycidylpropyl]trimethylsilan mit Dimethylaminoessigsäure (Betain)

20,8 g wasserfreie Dimethylaminoessigsäure (0,2 Mol) werden zusammen mit 57,9 ml Isopropanol in einem 250-ml-Dreihalskolben, der mit Rührer, Rückflußkühler und Tropftrichter ausgestattet ist, vorgelegt und auf 50°C erhitzt.

Dann werden 37,8 g des in Beispiel 1 hergestellten [Glycidyloxypropyl]trimethylsilans (0,2 Mol) langsam zugetropft.

Nach der Beendigung des Zutropfens wird noch 6 Stunden unter Rückfluß gekocht. Am Rotationsverdampfer wird danach bei 80°C im Ölpumpenvakuum das Produkt vom Lösungsmittel sowie flüchtigen Verunreinigungen befreit.

Es bleibt ein rein weißer pulvriger Festkörper zurück, dessen 1 %ige Lösung in destilliertem Wasser auf einer Polypropylenoberfläche 10 mm spreitet und die Oberflächenspannung von Wasser auf einen Wert von 22,8 mN/m senkt.

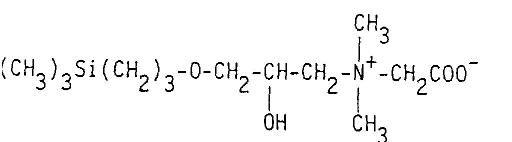

**Tabelle**

| Oberflächenspannungserniedrigung als Funktion der Konzentration einer wäßrigen Lösung | |
|---|---|
| Konzentration (Gew.-%) | Oberflächenspannung (mN/m) (T = 25°C) |
| 1,0 | 22,8 |
| 0,5 | 23,6 |
| 0,4 | 27,5 |
| 0,3 | 28,6 |
| 0,2 | 31,8 |
| 0,1 | 35,3 |

### Beispiel 3

### Reaktion von [Glycidyloxypropyl]trimethylsilan mit Dimethylisopropylamin/Essigsäure (Quat)

Zu einer Mischung von 18,13 g Dimethylisopropylamin (0,208 Mol), 6,25 g Essigsäure (0,104 Mol) und 10,0 g Isopropanol werden bei einer Innentemperatur von 50°C 19,67 g [Glycidylpropyl]trimethylsilan (0,104 Mol) zugetropft. Dann wird noch eine Stunde bei dieser Temperatur gerührt, wobei nach einer weiteren Stunde eine klare Lösung erhalten wird. Nach 5stündiger Nachreaktion bei Rückflußtemperatur ist die Reaktion beendet. Das Produkt wird am Rotationsverdampfer im Ölpumpenvakuum und bei 70°C vom Lösungsmittel befreit. Man erhält eine klare, gelbbraune und viskose Flüssigkeit (%N/Theorie = 4,18, Praxis = 3,69; %Quat-N/Theorie = 4,18, Praxis = 3,61).

Das Produkt besitzt gemäß der durchgeführten Spektroskopie die allgemeine Formel

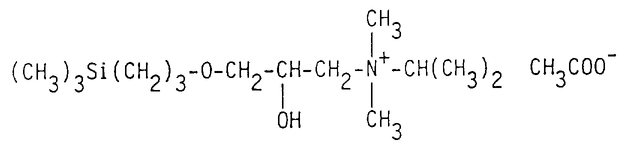

Eine 1 %ige wäßrige Lösung spreitet auf Polypropylen 32 mm und zeigt eine Oberflächenspannung von 22,6 mN/m.

**Tabelle**

| Oberflächenspannungserniedrigung als Funktion der Konzentration einer wäßrigen Lösung | |
|---|---|
| Konzentration (Gew.-%) | Oberflächenspannung (mN/m) (T = 25°C) |
| 1,0 | 22,6 |
| 0,5 | 25,7 |
| 0,4 | 26,3 |
| 0,3 | 27,0 |
| 0,2 | 28,8 |
| 0,1 | 31,6 |

### Beispiel 4

### Reaktion von [Glycidyloxypropyl]trimethylsilan mit Natriumhydrogensulfit (Sulfonat)

18,9 g [Glycidyloxypropyl]trimethylsilan (0,1 Mol) werden zusammen mit 24,12 g Wasser, 38,3 g Isopropanol sowie 2,52 g Natriumsulfit (0,02 Mol) in einem 250-ml-Dreihalskolben, der mit Rückflußkühler und einem Tropftrichter ausgestattet ist, vorgelegt und unter Stickstoffbedampfung bis auf Rückflußtemperatur erhitzt. Dann werden tropfenweise 22,5 g einer 37 %igen Lösung von Natriumthiosulfat in Wasser zudosiert. Nach beendeter Reaktion wird die Reaktionsmischung durch Zugabe einer Lösung von 10 Gew.-% Essigsäure in destilliertem Wasser auf pH 7 eingestellt und anschließend filtriert.

Flüchtige Bestandteile werden zunächst bei Normaldruck später im Ölpumpenvakuum am Rotationsverdampfer abdestilliert, wobei eine Temperatur von 90°C nicht überschritten wird. Dabei wird ein weißer Festkörper erhalten, dessen 1 %ige wäßrige Lösung auf Polypropylenfolie 20 mm spreitet und eine Oberflächenspannung von 25,9 mN/m aufweist.

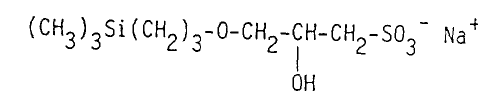

**Tabelle**

| Oberflächenspannungserniedrigung als Funktion der Konzentration einer wäßrigen Lösung | |
|---|---|
| Konzentration (Gew.-%) | Oberflächenspannung (mN/m) (T = 25°C) |
| 1,0 | 25,9 |
| 0,5 | 26,8 |
| 0,3 | 27,9 |
| 0,2 | 28,8 |
| 0,1 | 30,0 |

### Beispiel 5

### Reaktion von [Glycidyloxypropyl]trimethylsilan mit Triethylammoniumhydrogensulfit (Kationen-Anionen-Tensid)

In einem 250-ml-Dreihalskolben, ausgestattet mit Rührer, Rückflußkühler und Tropftrichter, werden zu 23,12 g (0,126 Mol) Triethylammoniumhydrogensulfit, gelöst in 50 g Isopropanol, 47,5 g (0,252 Mol) [Glycidyloxypropyl]trimethylsilan bei einer Innentemperatur von 30°C zugetropft. Dann rührt man eine Stunde nach, wobei sich die Reaktionsmischung klärt, und erhitzt anschließend 6 h auf Rückflußtemperatur.

Nach dem Abkühlen wird mit 1 Gew.-% Bentonit A/J 10 versetzt und filtriert. Danach wird das Produkt im Ölpumpenvakuum bei 80°C Wasserbadtemperatur von flüchtigen Bestandteilen befreit.

Man erhält ein wasserklares, viskoses Produkt, das sich trübe in Wasser löst. Die 1 %ige Lösung in destilliertem Wasser weist eine Oberflächenspannung von 23 mN/m auf und ergibt auf einer Polypropylenplatte eine Spreitung von 30 mm. Analytische Untersuchungen mittels ¹H-und ¹³C-NMR-Spektroskopie bestätigen, daß das Umsetzungsprodukt die erwartete Struktur 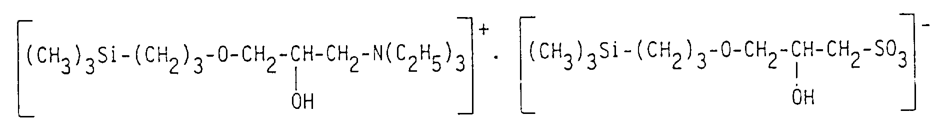 besitzt.

**Tabelle**

| Oberflächenspannungserniedrigung als Funktion der Konzentration einer wäßrigen Lösung | |
|---|---|
| Konzentration (Gew.-%) | Oberflächenspannung (mN/m) (T = 25°C) |
| 1,0 | 23,0 |
| 0,5 | 24,5 |
| 0,4 | 24,9 |
| 0,3 | 25,9 |
| 0,2 | 30,1 |
| 0,1 | 36,7 |

Überprüfung der Hydrolysestabilität der erfindungsgemäßen Substanzen bei pH 4, pH 7 und pH 12

Die Hydrolysestabilität der erfindungsgemäßen Produkte wird exemplarisch an den 1 %igen Lösungen in destilliertem Wasser des in Beispiel 3 hergestellten Quats sowie des in Beispiel 5 hergestellten Kationen-Anionen-Tensids demonstriert.

Zur Ermittlung des Netzvermögens wird die Spreitung eines 50-µl-Tropfens der 1 %igen Tensidlösung auf einer Polypropylenfolie über die maximale Flächenausdehnung gemessen. Reines Wasser liefert unter diesen Bedingungen einen Blindwert von 8 mm.
a) 1 % wäßrige Lösung des Quats:

| Lagerung/d bei RT | Spreitung [mm] bei | | | Aussehen der Lösung |
|---|---|---|---|---|
| | pH 4 | pH 7 | pH 12 | |
| 0 | 60 | 32 | 30 | leicht trübe |
| 5 | 65 | 25 | 25 | leicht trübe |
| 10 | 60 | 25 | 25 | leicht trübe |
| 15 | 60 | 25 | 25 | leicht trübe |
| 60 | 70 | 30 | 20 | leicht trübe |

b) 1 % wäßrige Lösung des Kationen-Anionen-Tensids:

| Lagerung/d bei RT | Spreitung [mm] bei | | | Aussehen der Lösung |
|---|---|---|---|---|
| | pH 4 | pH 7 | pH 12 | |
| 0 | 30 | 30 | 25 | trübe |
| 5 | 60 | 50 | 35 | trübe |
| 10 | 60 | 28 | 30 | trübe |
| 15 | 60 | 25 | 40 | trübe |
| 60 | 40 | 40 | 30 | trübe |

### Vergleichsbeispiel

Zum Vergleich wird die 1 %ige wäßrige Lösung eines Siloxansulfatesters der mittleren Formel 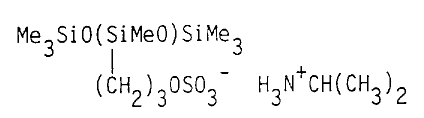 in die Stabilitätsuntersuchungen miteinbezogen:

| Lagerung/d bei RT | Spreitung [mm] bei | | | Aussehen der Lösung |
|---|---|---|---|---|
| | pH 4 | pH 7 | pH 12 | |
| 0 | 40 | 30 | 35 | trübe |
| 1 | / | 38 | 20 | trübe |
| 2 | / | 40 | 10 | trübe |
| 3 | / | 40 | 10 | trübe |
| 4 | / | 40 | / | trübe |
| 7 | / | 30 | / | trübe |
| ≥ 14 | / | / | / | trübe |

Die Untersuchung bestätigt eine exzellente Hydrolysestabilität der erfindungsgemäßen Silantenside im Gegensatz zu den Siloxantensiden des Standes der Technik.

### Beispiel 6

Wie in Beispiel 3 beschrieben, wird die Umsetzung des in Beispiel 1 synthetisierten Epoxysilans mit Triethylamin und Dimethylaminoethanol durchgeführt.

Dabei werden Produkte nachfolgender Strukturen erhalten. Die tensidischen Eigenschaften der 1 gew.-%igen Lösungen dieser Substanzen sind ebenfalls untenstehend aufgeführt:

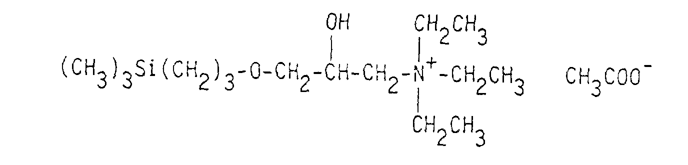

Die Oberflächenspannung einer 1 gew.-%igen wäßrigen Lösung beträgt 22,7 mN/m, die Spreitung auf Polypropylenfolie 20 mm.

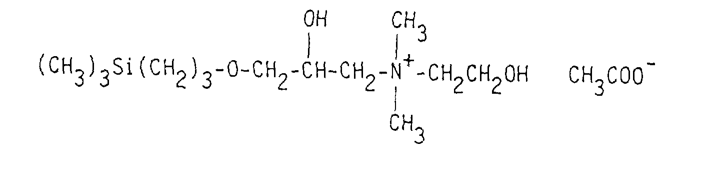

Die Oberflächenspannung einer 1 gew.-%igen wäßrigen Lösung beträgt 25,1 mN/m, die Spreitung auf Polypropylenfolie 10 mm.

### Beispiel 7

Der Versuchsdurchführung in Beispiel 1 folgend wird Vinylcyclohexenoxid an Trimethylsilan hydrosilylierend angelagert. Das resultierende Epoxysilan wird dann gemäß Beispiel 3 mittels Umsetzung mit Dimethylisopropylamin und Essigsäure in Isopropanol als Lösungsmittel in das entsprechende Quat überführt. Man erhält eine klare, wenig viskose, gelb-braune Flüssigkeit. Das Produkt besitzt gemäß der durchgeführten Spektroskopie folgende Formel: 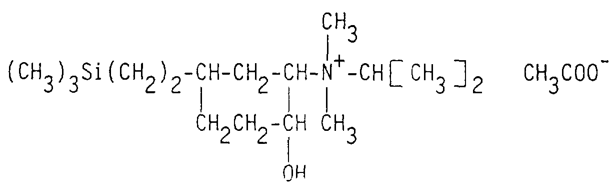 Die Oberflächenspannung einer 1 gew.-%igen wäßrigen Lösung dieser Substanz beträgt 33,5 mN/m, die Spreitung auf Polypropylenfolie 11 mm, wobei die schlechte Löslichkeit des Produktes auffallend ist.

## Patentansprüche

1. Silane der allgemeinen Formel 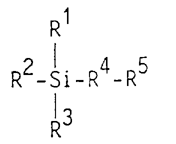 wobei
R¹, R und R³ im Molekül gleich oder verschieden sind und aliphatische oder aromatische Kohlenwasserstoffreste bedeuten,
R⁴ ein zweiwertiger Kohlenwasserstoffrest mit 4 bis 12 Kohlenstoffatomen und einer seitenständig gebundenen Hydroxylgruppe ist, wobei der Kohlenwasserstoffrest durch einen Ethersauerstoff unterbrochen sein kann,
R⁵ ein hydrophiler ionischer Rest ist.

2. Silane nach Anspruch 1, dadurch gekennzeichnet, daß R¹, R und R³ Alkylreste mit 1 bis 4 Kohlenstoffatomen sind, wobei einer dieser Reste durch einen Phenylrest ersetzt sein kann.

3. Silane nach Anspruch 2, dadurch gekennzeichnet, daß mindestens 90 % der Reste R¹, R und R³ Methylreste sind.

4. Silane nach einem oder mehreren der vorhergehenden Ansprüche, dadurch gekennzeichnet, daß der Rest R⁴ einer der Reste 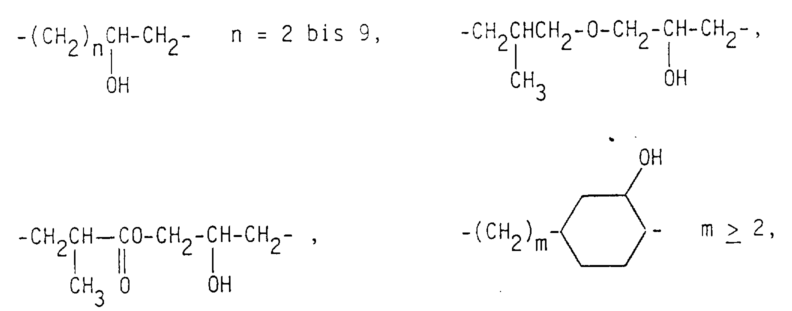 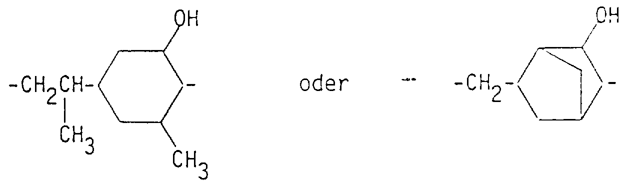 ist.

5. Silane nach einem oder mehreren der vorhergehenden Ansprüche, dadurch gekennzeichnet, daß der Rest R⁵ ein Rest der Formel 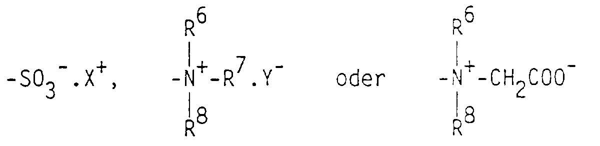 ist, wobei
R⁶, R⁷ und R⁸ Alkylreste mit 1 bis 6 Kohlenstoffatomen, die im Molekül gleich oder verschieden sein können, sind,
X⁺ ein Wasserstoff-, Alkali-, 1/2 Erdalkali- oder gegebenenfalls substituiertes Ammoniumion und
Y⁻ ein beliebiges Anion, vorzugsweise Halogen- oder Acetation, ist.

6. Verfahren zur Herstellung der Verbindungen nach den Ansprüchen 1 bis 5, dadurch gekennzeichnet, daß man
a) an Silane der allgemeinen Formel 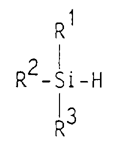 Epoxide, welche eine olefinische Doppelbindung aufweisen, in Gegenwart eines Hydrosilylierungskatalysators anlagert und
b) die erhaltenen silanmodifizierten Epoxide unter Öffnung des Epoxidringes in an sich bekannter Weise
b1) sulfoniert oder
b2) durch Umsetzung mit tertiären Aminen der Formel 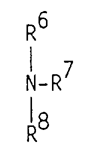 in Gegenwart einer Säure YH quaterniert oder
b3) durch Umsetzung mit einer Verbindung der Formel 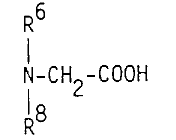 in das Betain überführt.

7. Verfahren nach Anspruch 6, dadurch gekennzeichnet, daß man die Hydrosilylierung bei erhöhter Temperatur und/oder in Gegenwart eines Lösungsmittels durchführt.

8. Verfahren nach Anspruch 6 oder 7, dadurch gekennzeichnet, daß man die Hydrosilylierung in Gegenwart eines Platinkatalysators durchführt.

9. Verwendung der Silane nach Anspruch 1 bis 5 als biologisch abbaubare, hydrolysestabile Tenside in Wasser enthaltenden Medien.

## Claims

1. Silanes of the general formula 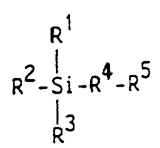 where
R¹, R and R³ in the molecule are identical or different and are aliphatic or aromatic hydrocarbon radicals,
R⁴ is a divalent hydrocarbon radical having from 4 to 12 carbon atoms and a laterally bonded hydroxyl group, where the hydrocarbon radical can be interrupted by an ether oxygen,
R⁵ is a hydrophilic ionic radical.

2. Silanes according to Claim 1, characterized in that R¹, R and R³ are alkyl radicals having from 1 to 4 carbon atoms, where one of these radicals can be replaced by a phenyl radical.

3. Silanes according to Claim 2, characterized in that at least 90% of the radicals R¹, R and R³ are methyl radicals.

4. Silanes according to one or more of the preceding claims, characterized in that the radical R⁴ is one of the radicals

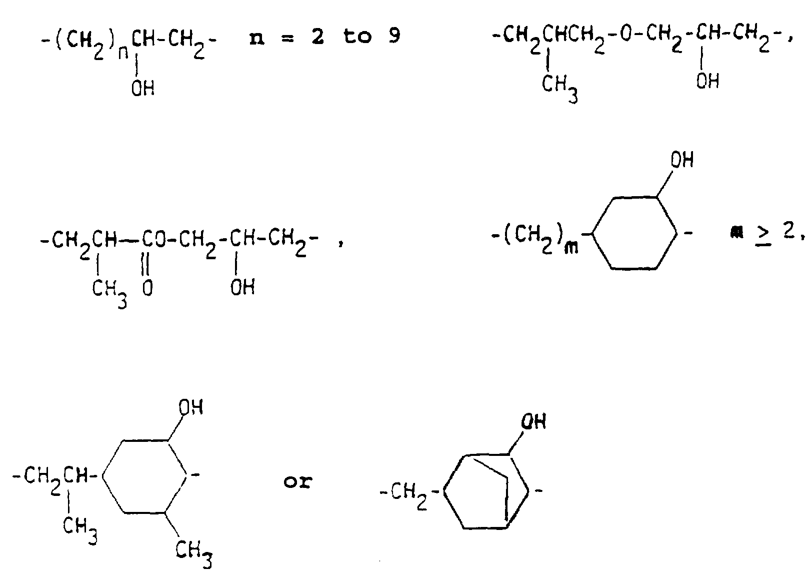

5. Silanes according to one or more of the preceding claims, characterized in that the radical R⁵ is a radical of the formula 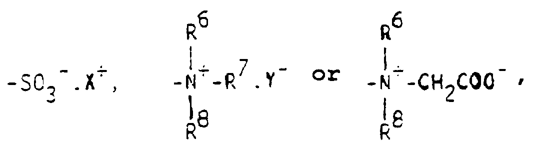 where
R⁶, R⁷ and R⁸ are alkyl radicals having from 1 to 6 carbon atoms, which can be identical or different in the molecule,
X⁺ is a hydrogen, alkali metal, 1/2 alkaline earth metal or an unsubstituted or substituted ammonium ion and
Y⁻ is any anion, preferably halide or acetate ion.

6. Process for preparing the compounds according to any of Claims 1 to 5, characterized in that
a) epoxides having an olefinic double bond are added onto silanes of the general formula 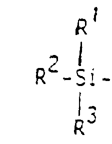 in the presence of a hydrosilylation catalyst and
b) the silane-modified epoxides obtained are, in a manner known per se with opening of the epoxide ring,
b1) sulphonated or
b2) quaternized by reaction with tertiary amines of the formula 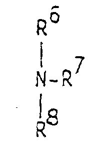 in the presence of an acid YH or
b3) converted into the betaine by reaction with a compound of the formula

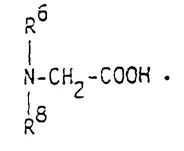

7. Process according to Claim 6, characterized in that the hydrosilylation is carried out at elevated temperature and/or in the presence of a solvent.

8. Process according to Claim 6 or 7, characterized in that the hydrosilylation is carried out in the presence of a platinum catalyst.

9. Use of the silanes according to any of Claims 1 to 5 as biodegradable, hydrolysis-stable surfactants in water-containing media.

## Revendications

1. Silanes répondant à la formule générale : 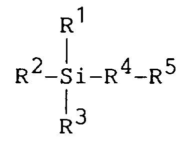 dans laquelle
R¹, R et R³ peuvent être identiques ou différents dans la molécule et signifient des restes hydrocarbonés aliphatiques ou aromatiques,
R⁴ est un reste hydrocarboné bivalent ayant de 4 à 12 atomes de carbone et un groupe hydroxyle lié à la chaîne latérale, le reste hydrocarboné pouvant être interrompu par un atome d'oxygène en fonction éther, et
R⁵ est un reste ionique hydrophile.

2. Silanes selon la revendication 1, caractérisés en ce que R¹, R et R³ sont des restes alkyles ayant de 1 à 4 atomes de carbone, un de ces restes pouvant être remplacé par un reste phényle.

3. Silanes selon la revendication 2, caractérisés en ce qu'au moins 90 % des restes R¹, R et R³ sont des restes méthyle.

4. Silanes selon une ou plusieurs des revendications précédentes, caractérisés en ce que le reste R⁴ est un des restes

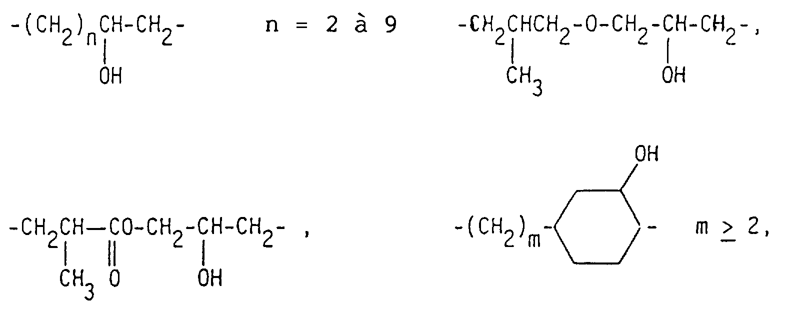

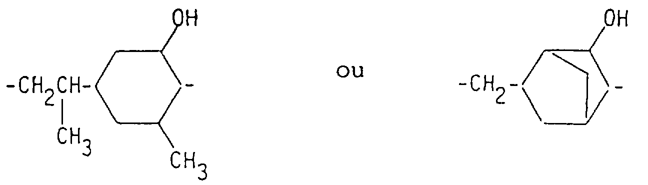

5. Silanes selon une ou plusieurs des revendications précédentes, caractérisés en ce que le reste R⁵ est un reste répondant à la formule 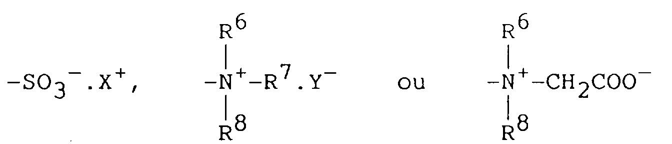 où
R⁶, R⁷ et R⁸ sont des restes alkyles ayant de 1 à 6 atomes de carbone, qui peuvent être identiques ou différents dans la molécule,
X⁺ est un ion hydrogène, alcalin, 1/2 alcalin ou un ion ammonium éventuellement substitué, et
Y⁻ est un anion quelconque, de préférence un ion halogène ou un ion acétate.

6. Procédé de préparation des composés selon les revendications 1 à 5, caractérisé en ce que :
a) sur des silanes répondant à la formule générale 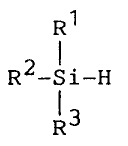 on fixe par addition des époxydes qui comportent une double liaison oléfinique, en présence d'un catalyseur d'hydrosilylation, et
b) b1) on sulfone les époxydes obtenus, modifiés avec les silanes, avec ouverture du cycle époxydique, d'une manière connue en soi, ou
b2) on les quaternise par réaction avec des amines tertiaires répondant à la formule 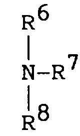 en présence d'un acide YH, ou
b3) on les transforme en bétaïne par réaction avec un composé répondant à la formule

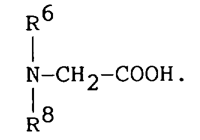

7. Procédé selon la revendication 6, caractérisé en ce qu'on effectue l'hydrosilylation à une température élevée et/ou en présence d'un solvant.

8. Procédé selon la revendication 6 ou 7, caractérisé en ce qu'on effectue l'hydrosilylation en présence d'un catalyseur de platine.

9. Utilisation des silanes selon les revendications 1 à 5 comme agents tensio-actifs biodégradables et résistants à l'hydrolyse dans des milieux contenant de l'eau.
